# EUROPÄISCHE PATENTSCHRIFT

(11) **EP 2 122 995 B1**
(45) Veröffentlichungstag und Bekanntmachung des Hinweises auf die Patenterteilung: **10.08.2016**
(21) Anmeldenummer: 06840884.8
(22) Anmeldetag: 22.12.2006
(51) Int. Cl.: H04L 29/08

(54) **VERFAHREN ZUM VERBREITEN EINER COMPUTERDATENSTRUKTUR AUF KNOTEN EINES NETZWERKS**
METHOD FOR SPREADING A COMPUTER DATA STRUCTURE TO NODES OF A NETWORK
PROCÉDÉ POUR DIFFUSER UNE STRUCTURE DE DONNÉES INFORMATIQUES DANS DES NOEUDS D'UN RÉSEAU

(43) Veröffentlichungstag der Anmeldung: 25.11.2009
(73) Patentinhaber: Siemens Aktiengesellschaft, 80333 München (DE)
(72) Erfinder: BANIK, Thomas, 91058 Erlangen (DE); ERLMANN, Markus, 90449 Nürnberg (DE); GERLACH, Hendrik, 91058 Erlangen (DE); PLAUM, Reiner, 91052 Erlangen (DE); SCHÖNMÜLLER, Bernd, 90475 Nürnberg (DE); TALANIS, Thomas, 91336 Heroldsbach (DE); VOLKMANN, Frank, 90475 Nürnberg (DE)
(86) Internationale Anmeldenummer: PCT/DE2006/002304
(87) Internationale Veröffentlichungsnummer: WO 2008/077360

(56) Entgegenhaltungen:
- WO-A-02/29551
- US-A1- 2006 215 582
- US-B1- 6 560 643

## Beschreibung

Die Erfindung betrifft ein Verfahren zum Verbreiten einer Computerdatenstruktur auf Knoten eines Netzwerks, eine Computerdatenstruktur, Netzwerkknoten, sowie ein Netzwerk.

Netzwerke sind Zusammenschlüsse von verschiedenen technischen primär selbständigen Systemen, insbesondere Computern, aber auch Sensoren, Aktoren, funktechnologische Komponenten usw., so dass eine Kommunikation der einzelnen Systeme untereinander ermöglicht wird. Die einzelnen Systeme werden dabei als Netzwerkknoten bzw. als Knoten des Netzwerkes bezeichnet. Die Kommunikation erfolgt über verschiedene Medien, wie z. B. WLAN oder LAN.

Netzwerke finden auch Verwendung in der Automatisierungstechnik. Als solche sind sie Bestandteil von Automatisierungssystemen, die z. B. zur Durchführung von verfahrenstechnischen Prozessen eingesetzt werden. Die einzelnen Netzwerkknoten können dabei im Automatisierungssystem unterschiedliche oder auch die gleichen Aufgaben durchführen. So führen z. B. manche Netzwerkknoten im Automatisierungssystem Überwachungsfunktionen aus und andere führen Regelungsfunktionen aus. Zur Durchführung der Aufgaben ist auch Software, wie z. B. Firmware, auf den Netzwerkknoten installiert. Ferner können auf Netzwerkknoten so genannte Agenten installiert sein, die z. B. zur Datenerhebung und zur Kontrolle des Knotens dienen.

Netzwerke werden zunehmend komplexer. Dadurch wird auch die Inbetriebnahme und Wartung der Netzwerke immer komplexer. So ist z. B. von Zeit zu Zeit die auf den Netzwerkknoten installierte Firmware zu aktualisieren oder neue Firmware oder Agenten müssen auf manchen Netzwerkknoten installiert werden.

Nach dem Stand der Technik werden die Netzwerkknoten eines Netzwerks einzeln, von einer zentralen Stelle aus, direkt angesprochen, um Installationen oder Aktualisierungen (Updates) der Firmware, der Agenten oder von sonstiger Software vorzunehmen. Dazu sind in der zentralen Stelle die Knoten in einer Liste zusammengefasst. Auf Basis dieser Liste erfolgt die Installation nacheinander (One-to-One) oder parallel (One-to-Many). Alternativ werden nach dem Stand der Technik die zu installierenden Software-Komponenten auf einem zentralen Server vorgehalten. Durch einen an die Netzwerkknoten gesendeten Trigger oder auch nach Ablauf von Überwachungs-Intervallen in den einzelnen Netzwerkknoten beginnen die Netzwerkknoten zu prüfen, ob auf dem zentralen Server neue Software-Komponenten bzw. neue Updates vorliegen. Ist dies der Fall, so beginnt eine Netzwerk-Komponente mit dem Herunterladen der Software und installiert diese anschließend. Dieses Prinzip ist z. B. auch aus dem PC-Bereich bekannt, wo Betriebssystem-Updates von einem zentralen Server über das Internet herunterladbar sind.

Wie bereits oben erwähnt, nimmt die Komplexität der Netzwerke ständig zu. Die nach dem Stand der Technik bekannten Verfahren zur Installation von Firmware, Agenten etc. haben daher den Nachteil, dass sie eine sehr sorgfältige Wartung des Netzwerkes erfordern. So muss z. B. die oben genannte Liste der Knoten stets auf dem aktuellen Stand sein, da ein Knoten, der aus irgendwelchen Gründen nicht in der Liste steht, auch nicht mit neuer oder aktuellerer Software versorgt werden kann. Ein Nachteil bei der Verwendung von einem zentralen Server ist, dass das Netzwerk unter Umständen stark belastet wird und daher eine temporäre Verminderung der Funktionsfähigkeit des Netzwerkes auftritt, falls mehrere Knoten, initiiert von dem Trigger, gleichzeitig die zu installierende Software herunterladen.

Ein Sensornetz ist ein Netzwerk, das aus kleinen bzw. Kleinstcomputern, so genannten Sensorknoten, besteht. Die Sensorknoten sind mit Sensoren ausgestattet und bewältigen durch Zusammenarbeit eine gemeinsame Aufgabe. Die Sensorknoten kommunizieren dabei in der Regel drahtlos miteinander und organisieren sich auch selbständig. Die Sensorknoten werden nach dem Stand der Technik in großer Zahl und in einem großen Gebiet ausgebracht und überwachen ihre Umgebung so lange, bis ihre Energiereserven erschöpft sind. Aufgrund ihrer Kleinheit, ihres günstigen Preises, ihrer Verwendung in großer Zahl und der Autonomität der Sensorknoten werden Sensorknoten bzw. Sensornetzwerke auch als "smart dust" bezeichnet. Selbstorganisierende Sensornetzwerke kennen nicht mehr unbedingt die Aufgabe jedes einzelnen Netzwerkknotens sondern nur noch die Aufgabe des Gesamtsystems. Hier ist es besonders problematisch, alle Netzwerkknoten zu finden, um diese mit neuer Firmware, mit neuen Agenten oder sonstiger Software zu aktualisieren.

Aus der Druckschrift WO 02/29551 A2 ist bereits ein Verfahren zum Verbreiten einer Computerdatenstruktur auf Knoten eines Netzwerks bekannt. Das Netzwerk verfügt über einen Network Management Server NMS, welcher die Datenpakete mit zu installierender Software versendet. Den Datenpaketen wir dabei eine Liste von Adresse der Netzelemente mitgegeben, an welche die Computerdatenstruktur weiter gereicht werden soll.

Aus der Druckschrift US 6,560,643 B1 ist ein Software Management System bekannt, welches zentral die Verteilung einer Computerdatenstruktur auf einzelne Knoten eines Netzwerks steuert.

Aufgabe der Erfindung ist es daher, ein verbessertes Verfahren zum Verbreiten von Nutzdaten wie etwa Firmware, Agenten oder sonstiger Software auf die Knoten eines Netzwerkes zur Verfügung zu stellen. Aufgabe der Erfindung ist es ferner, eine verbesserte Computerdatenstruktur, die für die Verbreitung von Nutzdaten auf den Knoten eines Netzwerkes vorgesehen ist, anzugeben. Ferner ist es Aufgabe der Erfindung, verbesserte Netzwerkknoten bzw. ein verbessertes Netzwerk anzugeben.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Durch die Erfindung wird ein Verfahren zum Verbreiten einer Computerdatenstruktur auf Knoten eines Netzwerkes angegeben. Die Computerdatenstruktur weist zumindest eine Schnittstelle für die Interaktion mit den Netzwerkknoten auf. Ferner erfolgt die Detektion von zumindest einem zweiten Knoten des Netzwerks von dem ersten Knoten aus. Die Computerdatenstruktur wird vom ersten Knoten zu dem zumindest einen zweiten Knoten übertragen, wo eine Installation der Nutzdaten über die Schnittstelle erfolgt. Vom zweiten Knoten aus erfolgt die Ermittlung von zumindest einem dritten Knoten, auf dem nach der Übertragung der Computerdatenstruktur vom zweiten zum dritten Knoten auch die Installation der Nutzdaten erfolgt. Vom dritten Knoten aus können dann weitere Knoten, wie zuvor für den ersten, zweiten und dritten Knoten beschrieben, detektiert werden, auf denen dann die Installation der Nutzdaten erfolgt. Damit kann die Verbreitung der Nutzdaten mittels der Computerdatenstruktur über das gesamte Netzwerk, das heißt über alle Netzwerkknoten, erzielt werden.

Die Computerdatenstruktur wird über den ersten Knoten in das Netzwerk eingebracht, von wo aus sich die Computerdatenstruktur im Wesentlichen selbstständig über die anderen Netzwerkknoten im Netzwerk verbreitet und somit die Nutzdaten über das Netzwerk verbreitet werden. Das erfindungsgemäße Verfahren hat den Vorteil, dass kein zentraler Update-Server mehr nötig ist. Damit kann die Verbreitung der Nutzdaten, also z.B. Aktualisierungen von Firmware oder Agenten, in einem komplexen Netzwerk, wie z. B. einem Sensornetzwerk, bewerkstelligt werden. Ein weiterer Vorteil des erfindungsgemäßen Verfahrens ist, dass keine genaue Kenntnis von der Anzahl und der Adresse der zu updatenden Netzwerkknoten mehr nötig ist, da die Detektion der einzelnen Netzwerkknoten von einem benachbarten Netzwerkknoten aus erfolgt. Ein weiterer Vorteil des erfindungsgemäßen Verfahrens ist, dass es relativ einfach und zeitsparend durchführbar ist. Im Prinzip muss die Computerdatenstruktur nur an einer Stelle in das Netzwerk eingebracht werden. Danach verbreitet sich die Computerdatenstruktur selbstständig bzw. in Wechselwirkung mit den einzelnen Netzwerkknoten im Netzwerk.

Nach einer Ausführungsform der Erfindung handelt es sich bei den Nutzdaten um ausführbaren Code, der von der Computerdatenstruktur auf den Knoten platziert wird. Dazu weist die Computerdatenstruktur ausführbaren Code auf. Die Computerdatenstruktur dient somit als Träger für die auf den Knoten ausführbaren Nutzdaten und bringt den Code, um die Nutzdaten (über die Schnittstelle) auf den jeweiligen Knoten zu installieren, selbst mit.

Nach einer Ausführungsform der Erfindung weist die Computerdatenstruktur einen Zähler auf. Der Zähler wird bei Einbringung der Computerdatenstruktur in das Netzwerk auf einen vorgegebenen Startwert gesetzt. Auf jedem Knoten, der von der Computerdatenstruktur erreicht wird oder auf dem die Nutzdaten installiert werden, wird der Zähler erniedrigt oder erhöht, wobei die Computerdatenstruktur nur an einen weiteren Knoten übermittelt wird, wenn der Zähler größer oder kleiner ist als ein Endwert. Dabei erfolgt die Erhöhung des Startwerts, falls der Endwert größer ist als der Startwert. Entsprechend erfolgt eine Erniedrigung des Startwerts, wenn der Endwert kleiner ist als der Startwert.

Beispielsweise weist die Computerdatenstruktur einen Zähler auf, wobei der Zähler bei Einbringung der Computerdatenstruktur in das Netzwerk auf einen vorgegebenen Startwert größer als Null gesetzt ist. Der Zähler wird auf jedem Knoten, der von der Computerdatenstruktur erreicht wird oder auf dem die Nutzdaten installiert werden, um Eins verringert, wobei die Computerdatenstruktur nur an einen weiteren Knoten übermittelt wird, wenn der Zähler größer als Null ist. Beim Verbreiten der Computerdatenstruktur wird daher der Zähler, ausgehend von einem Startwert, jeweils beim Erreichen eines neuen Knotens oder bei der Installation der Nutzdaten auf einem neuen Knoten, um Eins verringert. Die Computerdatenstruktur wird nur so lange im Netzwerk von einem Knoten zum nächsten Knoten übertragen, wie der Zähler größer als Null ist. Dies verhindert, dass die Computerdatenstruktur endlos im Netzwerk kreist.

Nach einer Ausführungsform der Erfindung erfolgt verfahrensgemäß die Speicherung der Computerdatenstruktur auf dem ersten Knoten, falls der zumindest eine zweite Knoten temporär nicht erreichbar ist, wobei die Computerdatenstruktur an einen zweiten Knoten übermittelt wird, wenn der zumindest eine zweite Knoten wieder erreichbar ist. Die einzelnen Knoten der Netzwerke können unter Umständen nicht permanent, sondern nur temporär betrieben werden. So werden z. B. die Knoten in einem Sensornetzwerk nur temporär betrieben, um Energie zu sparen. Die einzelnen Knoten befinden sich daher in einem Wach-Zustand oder in einem Schlaf-Zustand. Im Wach-Zustand führen die Knoten die ihnen zugewiesenen Aufgaben durch, wohingegen sie im Schlaf-Zustand keine Aufgaben durchführen. Man spricht in diesem Zusammenhang auch vom Tagesablauf eines Sensorknotens. Für den Fall, dass die Computerdatenstruktur sich auf dem ersten Knoten befindet, und falls die von dem ersten Knoten erreichbaren Knoten sich im Schlaf-Zustand befinden, wird erfindungsgemäß die Computerdatenstruktur gespeichert, so dass eine Übermittlung der Computerdatenstruktur zu den weiteren Knoten, also z. B. an den zweiten Knoten, dann erfolgt, wenn der Knoten sich wieder im Wach-Zustand befindet und daher auch eine Kommunikation mit dem ersten Knoten aufnehmen kann. Damit ist sichergestellt, dass die Computerdatenstruktur auch die Knoten erreicht, die nur temporär mit den anderen Knoten des Netzwerkes kommunizieren können.

Nach einer Ausführungsform der Erfindung weist jeder Knoten des Netzwerks, der für die Interaktion mit der Computerdatenstruktur vorgesehen ist, eine Andockstelle auf, wobei die Computerdatenstruktur über die Schnittstelle und die Andockstelle die Nutzdaten auf den Knoten übertragen wird. Die Andockstelle kann z. B. mittels eines Dienstes realisiert sein, über den die Nutzdaten auf den Knoten übertragen werden können.

Nach einer Ausführungsform der Erfindung weist die Computerdatenstruktur eine Signatur auf und jeder Knoten weist Mittel zur Überprüfung der Signatur auf. Verfahrensgemäß erfolgt die Installation der Computerdatenstruktur auf einem Netzwerkknoten nur, wenn durch die Mittel zur Überprüfung der Signatur die Authentizität der Signatur festgestellt worden ist. Die Andockstellen der einzelnen Knoten kann auch von schädlichen Datenstrukturen, wie etwa Würmern, verwendet werden, um schädliche und unerwünschte Programme auf dem Netzwerkknoten zu installieren. Durch die Überprüfung der Signatur auf Authentizität ist sichergestellt, dass nur Nutzdaten aus vertrauenswürdiger Quelle auf dem Netzwerkknoten installiert und somit ausgeführt werden.

Nach einer Ausführungsform der Erfindung wird im Anschluss an die Detektion des zweiten Knotens ermittelt, ob die Computerdatenstruktur bereits an den zweiten Knoten übermittelt worden ist. Falls die Computerdatenstruktur bereits an den zweiten Knoten übermittelt wurde, findet keine weitere Übertragung der Computerdatenstruktur statt. Damit ist sichergestellt, dass zum einen das Netzwerk nicht über das notwendige Maß hinaus belastet wird. Zum anderen wird, falls der oben genannte Zähler in der Computerdatenstruktur verwendet wird, sichergestellt, dass dieser nicht aufgrund einer Übermittlung an eine Datenstruktur, die die Computerdatenstruktur bereits empfangen hat, heruntergezählt wird und damit unter Umständen eine Verbreitung auf Netzwerkknoten, die die Computerdatenstruktur noch nicht erhalten haben, aufgrund dessen, dass der Zähler die Null erreicht, verhindert wird.

Nach einer Ausführungsform der Erfindung erfolgt die Überprüfung des Datenbestands des Netzwerkknotens, auf dem eine Installation der Nutzdaten vorgesehen ist. Für den Fall, dass die Nutzdaten für den Netzwerkknoten ungeeignet sind und/oder die Installation der Nutzdaten auf dem Netzwerkknoten unnötig ist, erfolgt keine Installation. Damit wird verhindert, dass Nutzdaten auf einem Knoten installiert werden, die von diesem Knoten gar nicht gebraucht werden und eine sich unter Umständen daraus ergebende Störung des Knotens unterbleibt.

Nach einer Ausführungsform der Erfindung werden die Nutzdaten zur Aktualisierung einer vorhandenen Anwendung auf dem Netzwerkknoten installiert, wobei die Installation erfolgt, ohne dass eine Ausführung der Anwendung auf dem Netzwerkknoten unterbrochen wird. Insbesondere, wenn die Nutzdaten für die Aktualisierung von einer vorhandenen Anwendung vorgesehen sind, ist es sinnvoll, diese so zu installieren, dass der Netzwerkknoten die Ausführung seiner ihm zugewiesenen Aufgabe nicht unterbrechen muss. Damit wird durch die vorgenommene Aktualisierung die Funktionalität des Netzwerkes bzw. des Netzwerkknotens auch nicht temporär eingeschränkt.

Nach einer Ausführungsform der Erfindung weist der Knoten einen Speicher auf, wobei die Anwendung in einem ersten Bereich des Speichers zur Ausführung gespeichert ist, wobei die Nutzdaten für eine zu aktualisierende Komponente der Anwendung vorgesehen sind und wobei die zu aktualisierende Komponente der Anwendung an einer Einsprungadresse, die im folgenden auch als erste Adresse (A1) bezeichnet wird, in dem ersten Bereich des Speichers abgelegt ist. Verfahrensgemäß erfolgt die Speicherung der Nutzdaten unter einer zweiten Adresse (A2) in einem zweiten, freien Bereich des Speichers. Anschließend wird ein erster Sprungbefehl (J1) im Speicher installiert, wobei der erste Sprungbefehl (J1) auf die erste Adresse (A1) führt. Ferner erfolgt die Ermittlung von Sprung- und Call-Befehlen in der Anwendung, die auf die Einsprungadresse (erste Adresse A1) führen. Die ermittelten Sprung- und Call-Befehle werden durch Sprung- und Call-Befehle ausgetauscht, die auf den ersten Sprungbefehl (J1) führen.

Nachdem alle Referenzen (Sprünge, Calls) auf A1 über J1 umgelenkt wurden, wird J1 auf A2 umgeschaltet, sodass schlagartig von der alten Komponente auf die neue, aktuelle Komponente umgeschaltet wird. Durch dieses schlagartige Umschalten wird ein eventuell problematischer Parallelbetrieb der alten Komponente und der aktuellen Komponente vermieden. Ferner kann optional in einem nachfolgenden Schritt ein Austausch aller Sprung- und Call-Befehle, die jetzt zu J1 führen, erfolgen, so dass die Sprung- und Call-Befehle direkt auf die zweite Adresse (A2) führen. Dadurch kann der Umweg über J1 wieder eingespart werden. Die Nutzdaten weisen daher nur die zu aktualisierende Komponente der Anwendung auf. Es wird nur ein so genanntes Delta-Update durchgeführt, indem die Sprungbefehle, die bisher auf die zu aktualisierende Komponente der Anwendung führen, nun auf die Nutzdaten, die in einem zweiten Adressbereich gespeichert werden, umgelenkt werden. Somit ist sichergestellt, dass, während die Anwendung ausgeführt wird, die zu aktualisierende Komponente aktualisiert werden kann.

Nach einer Ausführungsform der Erfindung ist die Einsprungadresse für die zu aktualisierende Komponente in der Computerdatenstruktur vorgegeben oder wird mittels eines vorgegebenen Suchverfahrens, z. B. unter Verwendung von Pattern-Matching-Verfahren, von der Computerdatenstruktur in der Anwendung ermittelt.

Nach einer Ausführungsform der Erfindung weist der Knoten einen Speicher und einen Service-Manager auf, wobei die Anwendung in einem ersten Bereich des Speichers zur Ausführung gespeichert ist und wobei die Nutzdaten eine neue Funktion der Anwendung bereitstellen. Erfindungsgemäß erfolgt die Speicherung der Nutzdaten auf einem freien, zweiten Bereich des Speichers. Ferner wird die neue Funktion beim Service-Manager angemeldet, wonach die neue Funktion der Anwendung für den Knoten ausführbar ist.

Nach einer Ausführungsform der Erfindung weist der Knoten einen Speicher auf und die Anwendung ist zur Ausführung in einem ersten Bereich des Speichers gespeichert. Die Nutzdaten stellen eine neue Funktion der Anwendung bereit. Verfahrensgemäß erfolgt die Speicherung der Nutzdaten unter einer zweiten Adresse auf einem freien, zweiten Bereich des Speichers. Ferner erfolgt die Ermittlung einer Anschlussstelle für die neue Funktion in der Anwendung, wobei die erste Anschlussstelle unter einer ersten Adresse im ersten Bereich gespeichert ist. Im Anschluss daran erfolgt die Installation eines ersten Sprungs von der ersten Adresse auf die zweite Adresse und eines zweiten Sprungs am Ende des zweiten Bereichs zurück auf die Adresse, die auf die erste Adresse folgt.

Nach einer Ausführungsform handelt es sich bei den Nutzdaten um Firmware, Aktualisierungen für Firmware, Agenten oder Killer-Agenten. Die Killer-Agenten sind dabei für die Deinstallation von Agenten auf den Netzwerkknoten vorgesehen.

Nach einer Ausführungsform der Erfindung handelt es sich bei dem Netzwerk um ein Netzwerk eines Automatisierungssystems oder um ein Sensornetzwerk.

In einem anderen Aspekt betrifft die Erfindung ein Computerprogrammprodukt mit computerausführbaren Instruktionen zur Durchführung des erfindungsgemäßen Verfahrens.

In einem anderen Aspekt betrifft die Erfindung eine Computerdatenstruktur mit zumindest einer Schnittstelle für die Interaktion mit den Knoten eines Netzwerkes, mit Nutzdaten und mit Mitteln zur Installation der Nutzdaten über die Schnittstelle auf einen ersten Knoten des Netzwerks. Die Computerdatenstruktur hat ferner Mittel zur Detektion zumindest eines zweiten Knotens des Netzwerks von dem ersten Knoten aus und Mitteln zum Übermitteln von sich selbst vom ersten Knoten zu dem zumindest einen zweiten Knoten. Ferner weist die Computerdatenstruktur Mittel zur Installation der Nutzdaten über die Schnittstelle auf dem zumindest einen zweiten Knoten und zur Suche von weiteren Knoten vom dem zweiten Knoten aus auf.

In einem anderen Aspekt betrifft die Erfindung einen Netzwerkknoten in einem Netzwerk mit einer Andockstelle für eine Schnittstelle einer Computerdatenstruktur, wobei die Computerdatenstruktur ferner Nutzdaten aufweist. Der Netzwerkknoten hat auch Mittel zur Installation der Nutzdaten auf dem Netzwerkknoten und Mittel zum Senden der Computerdatenstruktur an andere Netzwerkknoten des Netzwerks. Ferner weist der Netzwerkknoten Mittel zur Benachrichtigung eines zentralen Servers des Netzwerks auf, wobei durch die Benachrichtigung die Installation der Nutzdaten auf dem Netzwerkknoten dem Server angezeigt wird. Die Kommunikation zwischen den Netzwerkknoten in dem Netzwerk wird dabei über funkbasierte oder leitungsgebundene Kommunikationsverbindungen, die z. B. auf dem WLAN-, LAN- oder WIMAX-Standard beruhen, bewerkstelligt.

In einem weiteren Aspekt betrifft die Erfindung ein Netzwerk mit Netzwerkknoten und einem zentralen Server, wobei in dem Netzwerk Nutzdaten über eine Computerdatenstruktur auf die Netzwerkknoten verbreitbar sind, wobei Netzwerkknoten, auf denen eine Installation der Nutzdaten erfolgt ist, eine Benachrichtigung an den zentralen Server zur Anzeige der erfolgten Installation senden, wobei der Server Mittel zur Installation der Nutzdaten auf den Netzwerkknoten, die keine Benachrichtigung an den zentralen Server übermittelt haben, aufweist.

Bevorzugte Ausführungsformen der Erfindung werden nachfolgend anhand der Zeichnungen näher erläutert. Es zeigen:
- FIG 1: zeigt ein Blockdiagramm eines Netzwerks,
- FIG 2: zeigt ein Flussdiagramm, das Schritte des erfindungsgemäßen Verfahrens wiedergibt,
- FIG 3: zeigt ein Blockdiagramm einer Computerdatenstruktur,
- FIG 4: zeigt schematisch ein Blockdiagramm eines beschreibbaren Speichermediums und
- FIG 5: zeigt ein Blockdiagramm eines Netzwerks mit einem zentralen Server.

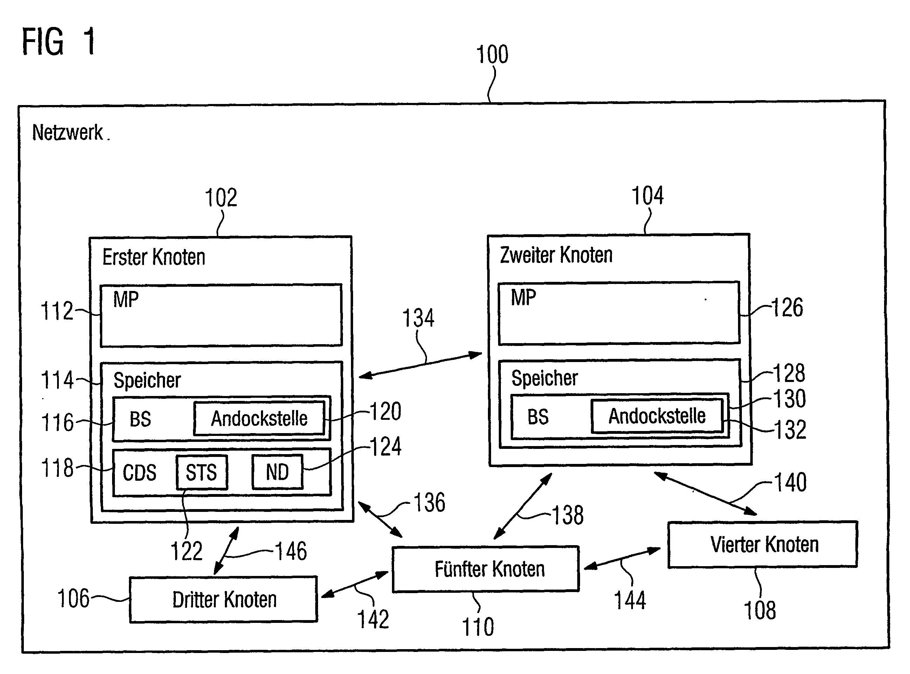

FIG 1 zeigt ein Blockdiagramm eines Netzwerks 100. Das Netzwerk 100 umfasst einen ersten Knoten 102, einen zweiten Knoten 104, einen dritten Knoten 106, einen vierten Knoten 108 und einen fünften Knoten 110. Bei den Knoten 102 bis 110 handelt es beispielsweise um Computersysteme oder um Sensorknoten, die zur drahtlosen Kommunikation miteinander verbunden sind. Dazu werden Kommunikationsverbindungen 134, 136, 138, 140, 142, 144 und 146 zwischen jeweils zwei Knoten eingerichtet. Bei den Kommunikationsverbindungen 134 bis 146 handelt es beispielsweise um WLAN-Verbindungen.

Der erste Knoten 102 weist einen Mikroprozessor 112 und einen Speicher 114 auf. Der zweite Knoten 104 weist einen Mikroprozessor 126 und einen Speicher 128 auf. Der dritte, vierte und fünfte Knoten 106, 108, 110, weist jeweils auch einen Mikroprozessor und einen Speicher auf, die aus Gründen der Einfachheit hier nicht mehr dargestellt sind.

Auf dem Speicher 114 des ersten Knotens 102 ist ein Betriebssystem 116 gespeichert. Das Betriebssystem 116 wird, z. B. bei Inbetriebnahme des ersten Knotens 102, in den Mikroprozessor 112 geladen und von diesem ausgeführt. Das Betriebssystem 116 dient beispielsweise zur Steuerung der auf dem ersten Knoten 102 ablaufenden Prozesse. Das Betriebssystem 116 weist eine Andockstelle 120 für eine Schnittstelle 122 einer Computerdatenstruktur 118 auf. Die Computerdatenstruktur 118 wird über den ersten Knoten 102 in das Netzwerk eingespeist und kann daher über die Andockstelle 120 mit dem Betriebssystem 116 interagieren. Die Computerdatenstruktur 118 weist Nutzdaten 124 auf. Über die Schnittstelle 122 werden die Nutzdaten 124 auf den ersten Knoten übertragen und dann auf dem ersten Knoten 102 installiert.

Die Computerdatenstruktur 118 ist nun ferner so ausgebildet, dass sie vom ersten Knoten 102 weitere Knoten, z. B. den zweiten Knoten 104, des Netzwerkes detektieren kann. Nach der Detektion des zweiten Knotens 104 erfolgt eine Übertragung der Computerdatenstruktur 118 vom ersten Knoten 102 über die Kommunikationsverbindung 134 zum zweiten Knoten 104.

Auf dem zweiten Knoten 104 wird ebenfalls ein Betriebssystem 130 ausgeführt, das eine Andockstelle 132 für die Schnittstelle 122 der Computerdatenstruktur 118 aufweist. Das Betriebssystem 130 ist dabei typischerweise vom gleichen Typ wie das Betriebssystem 116. Über die Schnittstelle 122 und über die Andockstelle 132 können daher die Nutzdaten 124 von der Computerdatenstruktur 118 auf dem zweiten Knoten 104 übertragen werden und auf diesem installiert werden.

Die Computerdatenstruktur 118 sucht ferner vom zweiten Knoten 104 aus nach weiteren Knoten des Netzwerkes 100. Beispielsweise kann die Computerdatenstruktur 118 vom zweiten Knoten 104 aus den vierten Knoten 108 detektieren. Im Anschluss an die Detektion des vierten Knotens 108 erfolgt eine Übertragung der Computerdatenstruktur 118 über die Kommunikationsverbindung 140. Nach der erfolgten Übertragung können die Nutzdaten 124 in der gleichen Art und Weise, wie für den ersten und zweiten Knoten 102 und 104 beschrieben, auf dem vierten Knoten 108 installiert werden. Vom vierten Knoten 108 aus kann dann der fünfte Knoten 110 detektiert werden. Im Anschluss daran erfolgt eine Übertragung der Computerdatenstruktur 118 vom vierten Knoten über die Kommunikationsverbindung 144 zum fünften Knoten 110, wo die Nutzdaten 124 ebenfalls installiert werden. Vom fünften Knoten 110 aus kann die Computerdatenstruktur dann den dritten Knoten 106 detektieren und dann über die Kommunikationsverbindung 142 zum dritten Knoten 106 gelangen. Auf dem dritten Knoten 106 erfolgt eine Installation der Nutzdaten über eine für die Schnittstelle 122 der Computerdatenstruktur vom dritten Knoten bereitgestellte Andockstelle. Damit hat sich die Computerdatenstruktur 118 nach ihrer Einbringung in das Netzwerk 100 über alle Knoten des Netzwerkes verbreitet, so dass die Nutzdaten 104 auf den Knoten 102 bis 110 des Netzwerks installiert werden können.

Nach der zuvor beschriebenen Ausführungsform ist die Funktionalität der Initiierung der Installation der Nutzdaten und des Suchens von weiteren Netzwerkknoten in der Computerdatenstruktur 118 implementiert. Somit müssen die Knoten nur eine Andockstelle aufweisen, über die die Computerdatenstruktur 118 die Nutzdaten 124 auf die Knoten übertragen kann und dann die Installation der Nutzdaten 124 vornehmen kann bzw. zumindest die Installation initiieren kann. Alternativ kann jedoch eine entsprechende Infrastruktur zum Empfangen, Weiterleiten und Installieren der Nutzdaten 124 auf den Knoten 102 bis 110 eingerichtet sein. Dann weist die Computerdatenstruktur im Wesentlichen nur die Nutzdaten und die Schnittstelle auf, mittels derer an die Andockstelle angedockt werden kann.

Bei den Nutzdaten 124 kann es sich auch beispielsweise um ein Update für die Betriebssysteme 116 bzw. 130 handeln.

Es kann sich bei den Nutzdaten 124 auch um Agenten handeln, die auf den Knoten 102 bis 110 zur Überwachung der Knoten installiert werden. Es kann sich bei den Nutzdaten 124 auch um einen Killeragenten handeln, mittels dem ein auf den Knoten bereits installierter Agent deinstalliert wird.

Handelt es sich bei den Knoten 102 bis 110 um Sensorknoten, dann ist das Betriebssystemen 116 bzw. 130 typischerweise Bestandteil der Firmware und bei den Mikroprozessoren 112, 126 und Speichern 114, 128 handelt es sich um eingebettete Systeme, wobei die Speicher beschreibbare Speicher wie RAM, Flash Speicher oder EEPROMs sind. Bei den Nutzdaten 124 kann es sich daher auch um Aktualisierungen oder Erweiterungen für die Firmware handeln.

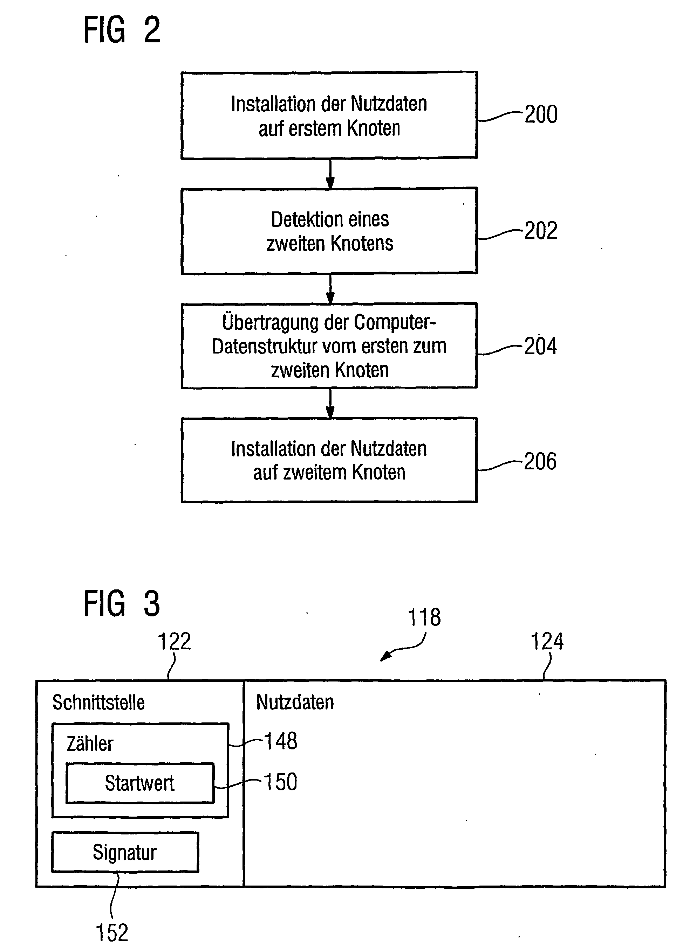

FIG 2 zeigt ein Flussdiagramm, das Schritte des erfindungsgemäßen Verfahrens zum Verbreiten einer Computerdatenstruktur auf Knoten eines Netzwerkes wiedergibt. Die Computerdatenstruktur weist dabei zumindest eine Schnittstelle für die Interaktion mit den Knoten des Netzwerkes und Nutzdaten auf. Erfindungsgemäß erfolgt in Schritt 200 die Installation der Nutzdaten über die Schnittstelle auf einem ersten Knoten des Netzwerks. In Schritt 202 erfolgt die Detektion von zumindest einem zweiten Knoten des Netzwerkes von dem ersten Knoten aus. In Schritt 204 erfolgt die Übertragung der Computerdatenstruktur vom ersten zum zweiten Knoten. In Schritt 206 werden die Nutzdaten über die Schnittstelle auf den zumindest einen zweiten Knoten übertragen und installiert.

FIG 3 zeigt ein schematisches Blockdiagramm der Computerdatenstruktur 118. Wie bereits zuvor erwähnt, weist die Computerdatenstruktur eine Schnittstelle 122 und die Nutzdaten 124 auf. Die Nutzdaten 124 entsprechen dabei dem auf die Netzwerke zu installierenden Code, also dem Code der Software, Firmware, Agenten usw., der auf den Knoten des Netzwerkes zu installieren ist. In die Schnittstelle 122 ist ein Zähler 148 integriert. Der Zähler 148 ist bei Einbringung der Computerdatenstruktur 118 in das Netzwerk auf einen vorgegebenen Startwert 150, der größer als Null ist, gesetzt. Auf jedem Knoten, der von der Computerdatenstruktur erreicht wird oder auf dem die Nutzdaten installiert werden, wird der Zähler 148 beispielsweise um Eins verringert. Entspricht beispielsweise der Startwert 150 der Zahl 3 beim Einbringen der Computerdatenstruktur 118 in das Netzwerk 100 (vgl. FIG 1), dann verbreitet sich die Computerdatenstruktur 118 nur auf den zweiten Knoten 104 und auf den vierten Knoten 108 unter Berücksichtigung des in FIG 1 beschriebenen Verbreitungsweges der Computerdatenstruktur 118. Damit ist durch die Verwendung eines Zählers, der von einem Startwert ausgehend bis auf null heruntergezählt wird, sichergestellt, dass die Computerdatenstruktur 118 nicht endlos im Netzwerk verbleibt. Die Computerdatenstruktur 118 kann ferner eine Signatur 152 aufweisen, über die die Authentizität der Computerdatenstruktur 118 durch den Netzwerkknoten geprüft werden kann.

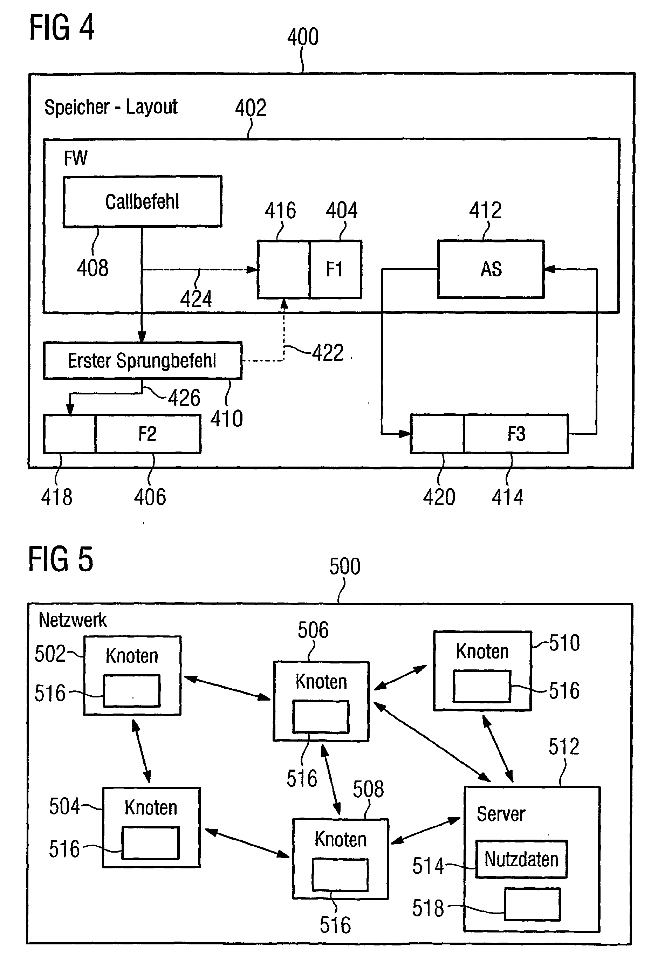

FIG 4 zeigt schematisch ein Blockdiagramm eines beschreibbaren Speichers 400. Bei dem Speicher 400 kann es sich z.B. um einen Flash-Speicher handeln. Auf dem Speicher 400 ist eine Firmware (FW) 402 gespeichert. Die Firmware 402 weist eine erste Komponente (F1) 404 auf, die z. B. eine Funktion zum Steuern des, den Speicher 400 beinhaltenden, Netzwerkknotens betrifft. Über die Computerdatenstruktur ist eine zweite Komponente (F2) 406 auf den, den Speicher beinhaltenden Knoten übermittelt worden. Die zweite Komponente 406 betrifft eine Aktualisierung der ersten Komponente 404. Zur Aktualisierung der Firmware 402 mit der zweiten Komponente 406 wird diese unter einer Adresse 418 in einem freien Bereich des Speichers 400 gespeichert. Dann erfolgt eine Installation eines ersten Sprungbefehls 410, der zunächst auf die Adresse 416 führt (gekennzeichnet in FIG 4 durch den Pfeil 422). Alle Sprung- und Call-Befehle, wie z. B. der Call-Befehl 408, die auf eine Einsprungadresse 416 der ersten Komponente 404 führen (gekennzeichnet durch den Pfeil 424 in Fig. 1), werden in der Firmware 402 detektiert. Im Anschluss daran erfolgt ein Austausch der ermittelten Sprung- und Call-Befehle durch Sprung- und Call-Befehle, die auf den ersten Sprungbefehl 410 führen. Damit weist z. B. der Call-Befehl 408 nun nicht mehr direkt auf die Einsprungadresse 416, die zur Ausführung der ersten Komponenten 404 führt, sondern über den ersten Sprungbefehl 410 auf die Adresse 416, so dass bei Aufruf des Call-Befehls 408 immer noch die erste Komponente 404 ausgeführt wird.

Nachdem alle ermittelten Sprung- und Call-Befehle ausgetauscht wurden, wird der Sprungbefehl 410 von der Zieladresse 416 auf die Adresse 418 umgeschaltet (siehe Pfeil 426 in Fig. 1). Dadurch wird nun nicht mehr die erste Komponente 404, sondern die zweite Komponente 406 ausgeführt, die einer Aktualisierung der ersten Komponente 404 entspricht. Fakultativ können ferner alle Sprung- und Call-Befehle, die nun auf den ersten Sprungbefehl 410 führen, durch Sprung- und Call-Befehle ausgetauscht werden, die sofort auf die Adresse 418 führen. Damit kann ein Update einer ersten Komponente der Firmware "On-the-Fly" durchgeführt werden, so dass die Firmware für ihre eigentliche Aufgabe verfügbar bleibt.

Es kann auch eine dritte Komponente 414, die unter einer anderen Adresse 420 in einem freien Bereich des Speichers 400 gespeichert wird, auf den entsprechenden Netzwerkknoten übertragen werden. Ferner wird zur Installation der dritten Komponente 414 eine geeignete Anschlussstelle (AS) 412 in der Firmware 402 ermittelt, an die, der der dritten Komponente 414 entsprechende Code angehängt wird. Im Anschluss an den der dritten Komponente 414 entsprechenden Code wird ein Rücksprungbefehl auf die Adresse direkt hinter der Anschlussstelle 412 eingefügt.

FIG 5 zeigt ein Blockdiagramm eines Netzwerks 500 mit den Netzwerkknoten 502 bis 512, wobei der Netzwerkknoten 512 von einem zentralen Server gebildet wird. Verfahrensgemäß können Nutzdaten 514, von denen eine Kopie auch auf dem Server 512 gespeichert ist, an die Knoten 502, 504, 506, 508 und 510 nach Einbringung der Computerdatenstruktur in das Netzwerk 500 an die einzelnen Knoten übertragen und dort installiert werden. Jeder Knoten 502 - 510 weist Mittel zur Benachrichtigung 516 des zentralen Servers 512 auf. Durch die Benachrichtigung wird die Installation der Nutzdaten auf dem Netzwerkknoten auf dem entsprechenden Knoten dem Server 512 angezeigt. Empfängt der Server von einem der Knoten, beispielsweise von Knoten 510, keine Benachrichtigung, so kann der Server über Installationsmittel 518 die Nutzdaten 514 an den Knoten 510 übermitteln und dort die Installation der Nutzdaten 514 initiieren.

## Patentansprüche

1. Verfahren zum selbstorganisierten Verbreiten einer Computerdatenstruktur (118)
auf Knoten eines Netzwerks (100), wobei die Computerdatenstruktur zumindest eine Schnittstelle (122) für die Interaktion mit den Knoten (102, ...110) des Netzwerks aufweist, und wobei die Computerdatenstruktur Nutzdaten (124) aufweist, und die Computerdatenstruktur sich im Wesentlichen selbständig, ohne Kenntnis der Anzahl und Adresse der zu updatenden Knoten des Netzwerks über die Netzwerkknoten im Netzwerk verbreitet indem das Verfahren die folgenden Schritte aufweist:
a) Installation der Nutzdaten über die Schnittstelle auf einem ersten Knoten (102) des Netzwerks;
b) Detektion zumindest eines zweiten Knotens (104) des Netzwerks von dem ersten Knoten aus;
c) Übertragung der Computerdatenstruktur vom ersten Knoten zu dem zumindest einen zweiten Knoten;
d) Installation der Nutzdaten über die Schnittstelle auf dem zumindest einen zweiten Knoten;
e) Wiederholung der Schritte b) bis d), wobei zumindest ein dritter Knoten dem zweiten Knoten entspricht und wobei der zweite Knoten dem ersten Knoten entspricht
und die Detektion der einzelnen Netzwerkknoten von einem jeweils benachbarten Netzwerkknoten erfolgt.

2. Verfahren nach Anspruch 1, wobei die Computerdatenstruktur zuvor über den ersten Knoten in das selbstorganisierte Netzwerk eingebracht worden ist.

3. Verfahren nach Anspruch 1 oder 2, wobei es sich bei den Nutzdaten um ausführbaren Code handelt und wobei die Computerdatenstruktur ferner ausführbaren Code aufweist, um die Nutzdaten auf den Knoten (102, 104) zu platzieren.

4. Verfahren nach Anspruch 1, 2 oder 3, wobei die Computerdatenstruktur einen Zähler (148) aufweist, wobei der Zähler bei Einbringung der Computerdatenstruktur in das Netzwerk auf einen vorgegebenen Startwert (150) gesetzt ist, wobei der Zähler auf jedem Knoten, der von der Computerdatenstruktur erreicht wird oder auf dem die Nutzdaten installiert werden, erniedrigt oder erhöht wird, wobei die Computerdatenstruktur nur an einen weiteren Knoten übermittelt wird, wenn der Zähler größer oder kleiner ist als ein Endwert, wobei die Erhöhung des Startwerts erfolgt, falls der Endwert größer ist als der Startwert und wobei entsprechend die Erniedrigung des Startwerts erfolgt, wenn der Endwert kleiner ist als der Startwert.

5. Verfahren nach einem der Ansprüche 1 bis 4, ferner mit dem Schritt der Speicherung der Computerdatenstruktur auf dem ersten Knoten, falls der zumindest eine zweite Knoten temporär nicht erreichbar ist, wobei die Computerdatenstruktur an den zweiten Knoten übermittelt wird, wenn der zumindest eine zweite Knoten wieder erreichbar ist.

6. Verfahren nach einem der vorhergehenden Ansprüche, wobei jeder Knoten des Netzwerks, der für die Interaktion mit der Computerdatenstruktur vorgesehen ist, eine Andockstelle (120, 132) aufweist, wobei die Computerdatenstruktur über die Schnittstelle und die Andockstelle die Nutzdaten auf den Knoten überträgt.

7. Verfahren nach einem der vorhergehenden Ansprüche, wobei die Computerdatenstruktur eine Signatur (152) aufweist, wobei jeder Knoten Mittel zur Überprüfung der Signatur aufweist, wobei die Installation der Computerdatenstruktur und/oder der Nutzdaten auf einem Knoten nur erfolgt, wenn durch die Mittel zur Überprüfung der Signatur die Authentizität der Signatur festgestellt worden ist.

8. Verfahren nach einem der vorhergehenden Ansprüche, wobei im Anschluss an die Detektion des zweiten Knotens ermittelt wird, ob die Computerdatenstruktur bereits an den zweiten Knoten übermittelt worden ist, und wobei keine weitere Übertragung der Computerdatenstruktur stattfindet, falls die Computerdatenstruktur bereits an den zweiten Knoten übermittelt worden ist.

9. Verfahren nach einem der vorhergehenden Ansprüche, ferner mit dem Schritt der Überprüfung des Datenbestands des Knotens, auf dem eine Installation der Nutzdaten vorgesehen ist, wobei, für den Fall, dass die Nutzdaten für den Knoten ungeeignet sind und /oder die Installation der Nutzdaten auf dem Knoten unnötig ist, keine Installation der Nutzdaten erfolgt.

10. Verfahren nach einem der vorhergehenden Ansprüche, wobei die Nutzdaten zur Aktualisierung einer vorhandenen Anwendung auf dem Knoten installiert werden, wobei die Installation erfolgt, ohne dass eine Ausführung der Anwendung auf dem Knoten unterbrochen wird.

11. Verfahren nach Anspruch 10, wobei der Knoten einen Speicher (400) aufweist, wobei die Anwendung (402) in einem ersten Bereich des Speichers zur Ausführung gespeichert ist, wobei die Nutzdaten (406) für eine zu aktualisierende Komponente (404) der Anwendung vorgesehen sind, wobei die zu aktualisierende Komponente der Anwendung an einer Einsprung-adresse (416) in dem ersten Bereich des Speichers abgelegt ist, ferner mit den Schritten:
- Speicherung der Nutzdaten unter einer zweiten Adresse (418) in einem zweiten, freien Bereich des Speichers;
- Installation eines ersten Sprungbefehls (410) im Speicher, wobei der erste Sprungbefehl zunächst noch auf die Einsprungadresse (416) führt;
- Ermittlung von Sprung- und Call-Befehlen (408) in der Anwendung im ersten Speicherbereich, die auf die Einsprungadresse (416) führen;
- Austausch der ermittelten Sprung- und Call-Befehle durch Sprung- und Call-Befehle, die auf den ersten Sprungbefehl führen;
- Umschaltung des ersten Sprungbefehls von der Einsprungadresse (416) auf die zweite Adresse (418);
- Optionaler Austausch aller Sprung- und Call-Befehle, die auf den ersten Sprungbefehl führen, durch Sprung- und Call-Befehle, die auf die zweite Adresse führen.

12. Verfahren nach Anspruch 11, wobei die Einsprungadresse für die zu aktualisierende Komponente in der Computerdatenstruktur vorgegeben ist oder mittels eines vorgegebenen Suchverfahrens von der Computerdatenstruktur ermittelt wird.

13. Verfahren nach Anspruch 10, wobei der Knoten einen Speicher (400) aufweist, wobei der Knoten ferner einen Service-Manager aufweist, wobei die Anwendung in einem ersten Bereich des Speichers zur Ausführung gespeichert ist, wobei die Nutzdaten eine neue Funktion der Anwendung bereitstellen, wobei das Verfahren ferner die folgenden Schritte aufweist:
- Speicherung der Nutzdaten auf einen freien, zweiten Bereich des Speichers;
- Anmeldung der neuen Funktion beim Service-Manager, wonach die neue Funktion der Anwendung für den Knoten ausführbar ist.

14. Verfahren nach Anspruch 10, wobei der Knoten einen Speicher (400) aufweist, wobei die Anwendung (402) in einem ersten Bereich des Speichers zur Ausführung gespeichert ist, wobei die Nutzdaten (414) eine neue Funktion der Anwendung bereitstellen, wobei das Verfahren ferner die folgenden Schritte aufweist:
- Speicherung der Nutzdaten unter einer zweiten Adresse (420) auf einem freien, zweiten Bereich des Speichers;
- Ermittlung einer Anschlussstelle (412) für die neue Funktion in der Anwendung, wobei die erste Anschlussstelle unter einer ersten Adresse im ersten Bereich gespeichert ist;
- Installation eines ersten Sprungs von der ersten Adresse auf die zweite Adresse und eines zweiten Sprungs am Ende des zweiten Bereichs zurück auf eine dritte Adresse, wobei die dritte Adresse auf die erste Adresse folgt.

15. Verfahren nach einem der vorhergehenden Ansprüche, wobei es sich bei den Nutzdaten um Firmware, Aktualisierungen für Firmware, Agenten oder Killeragenten handelt, wobei die Killeragenten für die Deinstallation von Agenten auf den Knoten vorgesehen sind.

16. Verfahren nach einem der vorhergehenden Ansprüche, wobei es sich bei dem Netzwerk um ein Netzwerk eines Automatisierungssystems oder um ein Sensornetzwerk handelt.

17. Computerprogrammprodukt mit computerausführbaren Instruktionen zur Durchführung des Verfahrens nach einem der Ansprüche 1 bis 16.

18. Computerdatenstruktur (418), vorgesehen zur im Wesentlichen selbständigen Verbreitung von Nutzdaten, ohne Kenntnis der Anzahl und Adresse der zu updatenden Knoten des Netzwerks über die Netzwerkknoten im Netzwerk auf Knoten eines selbstorganisierten Netzwerks, mit:
- zumindest einer Schnittstelle für die Interaktion mit den Knoten des Netzwerks;
- den Nutzdaten;
- Mitteln zur Installation der Nutzdaten über die Schnittstelle auf einem ersten Knoten des Netzwerks;
- Mitteln zur Detektion zumindest eines zweiten Knotens des Netzwerks von dem ersten Knoten aus, wobei die Detektion der einzelnen Netzwerkknoten von einem jeweils benachbarten Netzwerkknoten erfolgt;
- Mitteln zum Übermitteln von sich selbst vom ersten Knoten zu dem zumindest einen zweiten Knoten;
- Mitteln zur Installation der Nutzdaten über die Schnittstelle auf dem zumindest einen zweiten Knoten und zur Suche von weiteren Knoten von dem zweiten Knoten aus

19. Computerdatenstruktur nach Anspruch 18, wobei es sich bei den Nutzdaten um ausführbaren Code handelt und wobei die Computerdatenstruktur ferner ausführbaren Code aufweist, wobei mit dem ausführbaren Code die Nutzdaten auf den Knoten (102, 104) platzierbar sind.

20. Computerdatenstruktur nach Anspruch 18 oder 19, wobei die Computerdatenstruktur einen Zähler aufweist, wobei der Zähler bei Einbringung der Computerdatenstruktur in das Netzwerk auf einen vorgegebenen Startwert (150) gesetzt ist, wobei der Zähler auf jedem Knoten, der von der Computerdatenstruktur erreicht wird oder auf dem die Nutzdaten installiert werden, verringerbar oder vergrößerbar ist, wobei die Computerdatenstruktur nur an einen weiteren Knoten übermittelbar ist, wenn der Zähler größer oder kleiner ist als ein Endwert, wobei die Erhöhung des Startwerts erfolgt, falls der Endwert größer ist als der Startwert und wobei entsprechend die Verringerung des Startwerts erfolgt, wenn der Endwert kleiner ist als der Startwert.

21. Computerdatenstruktur nach Anspruch 18, 19 oder 20, ferner mit Mitteln zum Detektion, ob der zweite Knoten vom ersten Knoten erreichbar ist und mit Mitteln zur Initialisierung des ersten Knotens zur Speicherung der Computerdatenstruktur falls der zumindest eine zweite Knoten temporär nicht erreichbar ist.

22. Computerdatenstruktur nach einem der vorhergehenden Ansprüche 18 bis 21, wobei jeder Knoten des Netzwerks, der für die Interaktion mit der Computerdatenstruktur vorgesehen ist, eine Andockstelle aufweist, wobei die Computerdatenstruktur Mittel zur Übertragung der Nutzdaten über die Schnittstelle und die Andockstelle auf den Knoten aufweist.

23. Computerdatenstruktur nach einem der vorhergehenden Ansprüche 18 bis 22, ferner mit einer Signatur mittels der die Authentizität der Computerdatenstruktur feststellbar ist.

24. Computerdatenstruktur nach einem der vorhergehenden Ansprüche 18 bis 23, ferner mit Mitteln zur Detektion, ob die Computerdatenstruktur bereits an den zweiten Knoten übermittelt worden ist, und mit Mitteln zum Blockieren einer weiteren Übertragung der Computerdatenstruktur an den zweiten Knoten, falls die Computerdatenstruktur bereits an den zweiten Knoten übermittelt worden ist.

25. Computerdatenstruktur nach einem der vorhergehenden Ansprüche 18 bis 24, ferner mit Mitteln zur Überprüfung des Datenbestands des Knotens, auf dem eine Installation der Nutzdaten vorgesehen ist, und wobei, für den Fall, dass die Nutzdaten für den Knoten ungeeignet sind und /oder die Installation der Nutzdaten auf dem Knoten unnötig ist, keine Installation der Nutzdaten erfolgt.

26. Computerdatenstruktur nach einem der vorhergehenden Ansprüche 18 bis 25, mit Mitteln zur Installation der· Nutzdaten zur Aktualisierung einer vorhandenen Anwendung auf dem Knoten ohne eine Unterbrechung der Ausführung der Anwendung auf dem Knoten.

27. Computerdatenstruktur nach Anspruch 26, wobei der Knoten einen Speicher aufweist, wobei die Anwendung in einem ersten Bereich des Speichers zur Ausführung gespeichert ist, wobei die Nutzdaten für eine zu aktualisierende Komponente der Anwendung vorgesehen sind, wobei die zu aktualisierende Komponente der Anwendung an einer Einsprungadresse (416) in dem ersten Bereich des Speichers abgelegt ist, wobei die Computerdatenstruktur ferner folgendes aufweist:
- Mittel zur Speicherung der Nutzdaten unter einer zweiten Adresse in einem zweiten, freien Bereich des Speichers;
- Mittel zur Installation eines ersten Sprungbefehls im Speicher, wobei der erste Sprungbefehl zunächst auf die Einsprungadresse führt und später auf die zweite Adresse umschaltbar ist;
- Mittel zur Ermittlung von Sprung- und Call-Befehlen in der Anwendung, die auf die Einsprungadresse (416) führen;
- Mittel zum Austausch der ermittelten Sprung- und CallBefehle durch Sprung- und Call-Befehle, die auf den ersten Sprungbefehl führen;
- Mittel zum Austausch aller Sprung- und Call-Befehle, die auf den ersten Sprungbefehl führen, durch Sprung- und Call-Befehle, die auf die zweite Adresse führen.

28. Computerdatenstruktur nach Anspruch 27, wobei die Einsprungadresse für die zu aktualisierende Komponente in der Computerdatenstruktur vorgegeben ist oder mittels eines vorgegebenen Suchverfahrens von der Computerdatenstruktur ermittelt wird.

29. Computerdatenstruktur nach Anspruch 26, wobei der Knoten einen Speicher aufweist, wobei der Knoten ferner einen Service- Manager aufweist, wobei die Anwendung in einem ersten Bereich des Speichers zur Ausführung gespeichert ist, wobei die Nutzdaten eine neue Funktion der Anwendung bereitstellen, wobei die Computerdatenstruktur ferner folgendes aufweist:
- Mittel zur Speicherung der Nutzdaten auf einen freien zweiten Bereich des Speichers;
- Mittel zur Anmeldung der neuen Funktion beim ServiceManager, wonach die neue Funktion der Anwendung für den Knoten ausführbar ist.

30. Computerdatenstruktur nach Anspruch 26 wobei der Knoten einen Speicher aufweist, wobei die Anwendung in einem ersten Bereich des Speichers zur Ausführung gespeichert ist, wobei die Nutzdaten eine neue Funktion der Anwendung bereitstellen, wobei die Computerdatenstruktur ferner folgendes aufweist:
- Mittel zur Speicherung der Nutzdaten unter einer zweiten Adresse auf einen freien zweiten Bereich des Speichers;
- Mittel zur Ermittlung einer Anschlussstelle für die neue Funktion in der Anwendung, wobei die erste Anschlussstelle unter einer ersten Adresse im ersten Bereich gespeichert ist;
- Mittel zur Installation eines ersten Sprungs von der ersten Adresse auf die zweite Adresse und eines zweiten Sprungs am Ende des zweiten Bereichs zurück auf die, auf die erste Adresse folgende Adresse.

31. Netzwerkknoten (102; 502) in einem selbstorganisierten Netzwerk (100; 500) mit:
- einer Andockstelle (120) für eine Schnittstelle (122) einer Computerdatenstruktur (118), wobei die Computerdatenstruktur ferner Nutzdaten (124)aufweist,
- Mitteln zur Installation der Nutzdaten auf dem Netzwerkknoten,
- Mitteln zum Senden der Computerdatenstruktur an andere Net-zwerkknoten (104,.,,,110; 504,".,510) des Netzwerks
- Geeignet zur Durchführung des Verfahrens gemäß einem der Patentansprüche 1 bis 16.

32. Netzwerkknoten nach Anspruch 31, mit Mitteln zur Benachrichtigung (516) eines zentralen Servers (512) des Netzwerks, wobei durch die Benachrichtigung die Installation der Nutzdaten auf dem Netzwerkknoten dem Server angezeigt wird.

33. Netzwerkknoten nach Anspruch 31 oder 32, ferner mit Mitteln zur Überprüfung einer Signatur (152) der Computerdatenstruktur, wobei eine Installation der Nutzdaten nur dann von Netzwerkknoten durchgeführt wird, wenn die Authentizität der Signatur festgestellt worden ist.

## Claims

1. Method for distributing a computer data structure (118) to nodes of a network (100) in a self-organised manner, wherein the computer data structure has at least one interface (122) for interacting with the nodes (102, ..., 110) of the network, and wherein the computer data structure has useful data (124), and the computer data structure essentially autonomously distributes itself across the network nodes in the network without knowledge of the number and addresses of the nodes of the network to be updated, with the method having the following steps:
a) installation of the useful data via the interface on a first node (102) of the network;
b) detection of at least one second node (104) of the network from the first node;
c) transfer of the computer data structure from the first node to the at least one second node;
d) installation of the useful data via the interface on the at least one second node;
e) repetition of steps b) to d), wherein at least one third node corresponds to the second node and wherein the second node corresponds to the first node and the detection of the individual network nodes is performed from an adjacent network node in each case.

2. Method according to claim 1, wherein the computer data structure has been introduced into the self-organised network previously via the first node.

3. Method according to claim 1 or 2, wherein the useful data is executable code and wherein the computer data structure additionally has executable code in order to place the useful data on the nodes (102, 104).

4. Method according to claim 1, 2 or 3, wherein the computer data structure has a counter (148), wherein the counter is set to a predefined start value (150) when the computer data structure is introduced into the network, wherein the counter is decremented or incremented on each node which is reached by the computer data structure or on which the useful data is installed, wherein the computer data structure is transmitted to a further node only if the counter is greater or less than an end value, wherein the start value is increased if the end value is greater than the start value and wherein correspondingly the start value is reduced if the end value is less than the start value.

5. Method according to one of claims 1 to 4, additionally comprising the step of storing the computer data structure on the first node if the at least one second node is temporarily not accessible, wherein the computer data structure is transmitted to the second node when the at least one second node is accessible once more.

6. Method according to one of the preceding claims, wherein each node of the network which is provided for interacting with the computer data structure has a docking point (120, 132), wherein the computer data structure transfers the useful data to the node via the interface and the docking point.

7. Method according to one of the preceding claims, wherein the computer data structure has a signature (152), wherein each node has means for checking the signature, wherein the installation of the computer data structure and/or the useful data on a node is initiated only if the authenticity of the signature has been verified by the means for checking the signature.

8. Method according to one of the preceding claims, wherein following the detection of the second node it is determined whether the computer data structure has already been transmitted to the second node, and wherein no further transfer of the computer data structure takes place if the computer data structure has already been transmitted to the second node.

9. Method according to one of the preceding claims, additionally comprising the step of checking the data resources of the node on which an installation of the useful data is planned, wherein, in the event that the useful data is unsuitable for the node and/or the installation of the useful data on the node is unnecessary, no installation of the useful data is performed.

10. Method according to one of the preceding claims, wherein the useful data is installed for the purpose of updating an application already present on the node, wherein the installation is performed without interrupting an execution of the application on the node.

11. Method according to claim 10, wherein the node has a memory (400), wherein the application (402) is stored for execution purposes in a first partition of the memory, wherein the useful data (406) is provided for a component (404) of the application that is to be updated, wherein the component of the application that is to be updated is stored at an entry address (416) in the first partition of the memory, additionally comprising the steps:
- storing the useful data at a second address (418) in a second, free partition of the memory;
- installing a first jump instruction (410) in the memory, wherein the first jump instruction initially still leads to the entry address (416);
- determining jump and call instructions (408) in the application in the first memory partition which lead to the entry address (416);
- replacing the determined jump and call instructions by jump and call instructions which lead to the first jump instruction;
- switching over the first jump instruction from the entry address (416) to the second address (418);
- optionally replacing all jump and call instructions which lead to the first jump instruction by jump and call instructions which lead to the second address.

12. Method according to claim 11, wherein the entry address for the component that is to be updated in the computer data structure is predefined or determined by the computer data structure by means of a predefined search method.

13. Method according to claim 10, wherein the node has a memory (400), wherein the node also has a service manager, wherein the application is stored in a first partition of the memory for execution purposes, wherein the useful data provides a new function of the application, wherein the method additionally comprises the following steps:
- storing the useful data in a free, second partition of the memory;
- registering the new function with the service manager, after which the new function of the application is executable for the node.

14. Method according to claim 10, wherein the node has a memory (400), wherein the application (402) is stored for execution purposes in a first partition of the memory, wherein the useful data (414) provides a new function of the application, wherein the method additionally comprises the following steps:
- storing the useful data at a second address (420) in a free, second partition of the memory;
- determining a connection point (412) for the new function in the application, wherein the first connection point is stored at a first address in the first partition;
- installing a first jump from the first address to the second address and a second jump at the end of the second partition back to a third address, wherein the third address follows the first address.

15. Method according to one of the preceding claims, wherein the useful data is firmware, updates for firmware, agents or killer agents, wherein the killer agents are provided for deinstalling agents on the nodes.

16. Method according to one of the preceding claims, wherein the network is a network of an automation system or a sensor network.

17. Computer program product comprising computer-executable instructions for performing the method according to one of claims 1 to 16.

18. Computer data structure (418), provided for essentially autonomously distributing useful data across the network nodes in the network to nodes of a self-organised network without knowledge of the number and addresses of the nodes of the network to be updated, comprising:
- at least one interface for interacting with the nodes of the network;
- the useful data;
- means for installing the useful data via the interface on a first node of the network;
- means for detecting at least one second node of the network from the first node, wherein the detection of the individual network nodes is performed from an adjacent network node in each case;
- means for transmitting autonomously from the first node to the at least one second node;
- means for installing the useful data via the interface on the at least one second node and for searching for further nodes from the second node.

19. Computer data structure according to claim 18, wherein the useful data is executable code and wherein the computer data structure additionally has executable code, wherein the useful data can be placed on the nodes (102, 104) by means of the executable code.

20. Computer data structure according to claim 18 or 19, wherein the computer data structure has a counter, wherein the counter is set to a predefined start value (150) when the computer data structure is introduced into the network, wherein the counter can be decremented or incremented on each node which is reached by the computer data structure or on which the useful data is installed, wherein the computer data structure can be transmitted to a further node only if the counter is greater or less than an end value, wherein the start value is increased if the end value is greater than the start value and wherein correspondingly the start value is decreased if the end value is less than the start value.

21. Computer data structure according to claim 18, 19 or 20, additionally having means for detecting whether the second node can be reached from the first node and having means for initialising the first node for the purpose of storing the computer data structure if the at least one second node is temporarily inaccessible.

22. Computer data structure according to one of the preceding claims 18 to 21, wherein each node of the network which is provided for interacting with the computer data structure has a docking point, wherein the computer data structure has means for transferring the useful data to the node via the interface and the docking point.

23. Computer data structure according to one of the preceding claims 18 to 22, additionally having a signature by means of which the authenticity of the computer data structure can be verified.

24. Computer data structure according to one of the preceding claims 18 to 23, additionally comprising means for detecting whether the computer data structure has already been transmitted to the second node, and comprising means for blocking a further transfer of the computer data structure to the second node if the computer data structure has already been transmitted to the second node.

25. Computer data structure according to one of the preceding claims 18 to 24, additionally comprising means for checking the data resources of the node on which an installation of the useful data is planned, and wherein, in the event that the useful data is unsuitable for the node and/or the installation of the useful data on the node is unnecessary, no installation of the useful data is performed.

26. Computer data structure according to one of the preceding claims 18 to 25, comprising means for installing the useful data for the purpose of updating an existing application on the node without interrupting the execution of the application on the node.

27. Computer data structure according to claim 26, wherein the node has a memory, wherein the application is stored for execution purposes in a first partition of the memory, wherein the useful data is provided for a component of the application that is to be updated, wherein the component of the application that is to be updated is stored at an entry address (416) in the first partition of the memory, wherein the computer data structure additionally has the following:
- means for storing the useful data at a second address in a second, free partition of the memory;
- means for installing a first jump instruction in the memory, wherein the first jump instruction initially leads to the entry address and subsequently can be switched over to the second address;
- means for determining jump and call instructions in the application which lead to the entry address (416);
- means for replacing the determined jump and call instructions by jump and call instructions which lead to the first jump instruction;
- means for replacing all jump and call instructions which lead to the first jump instruction by jump and call instructions which lead to the second address.

28. Computer data structure according to claim 27, wherein the entry address for the component that is to be updated is predefined in the computer data structure or determined by the computer data structure by means of a predefined search method.

29. Computer data structure according to claim 26, wherein the node has a memory, wherein the node additionally has a service manager, wherein the application is stored for execution purposes in a first partition of the memory, wherein the useful data provides a new function of the application, wherein the computer data structure additionally has the following:
- means for storing the useful data in a free, second partition of the memory;
- means for registering the new function with the service manager, after which the new function of the application is executable for the node.

30. Computer data structure according to claim 26, wherein the node has a memory, wherein the application is stored for execution purposes in a first partition of the memory, wherein the useful data provides a new function of the application, wherein the computer data structure additionally has the following:
- means for storing the useful data at a second address in a free, second partition of the memory;
- means for determining a connection point for the new function in the application, wherein the first connection point is stored at a first address in the first partition;
- means for installing a first jump from the first address to the second address and a second jump at the end of the second partition back to the address following the first address.

31. Network node (102; 502) in a self-organised network (100; 500) comprising:
- a docking point (120) for an interface (122) of a computer data structure (118), wherein the computer data structure additionally has useful data (124),
- means for installing the useful data on the network node,
- means for sending the computer data structure to other network nodes (104, ..., 110; 504, ..., 510) of the network
- suitable for performing the method according to one of claims 1 to 16.

32. Network node according to claim 31, comprising means for notifying (516) a central server (512) of the network, wherein the installation of the useful data on the network node is indicated to the server by means of the notification.

33. Network node according to claim 31 or 32, additionally comprising means for checking a signature (152) of the computer data structure, wherein an installation of the useful data is carried out by network nodes only when the authenticity of the signature has been verified.

## Revendications

1. Procédé destiné à la diffusion auto-organisée d'une structure de données informatiques (118) sur les noeuds d'un réseau (100), dans lequel la structure de données informatiques présente au moins une interface (122) pour l'interaction avec les noeuds (102, ... 110) du réseau, et dans lequel la structure de données informatiques présente des données utiles (124), et la structure de données informatiques se diffuse pour l'essentiel de manière autonome, sans connaissance du nombre et de l'adresse des noeuds à mettre à jour du réseau via les noeuds de réseau dans le réseau, le procédé présentant les étapes suivantes :
a) l'installation des données utiles via l'interface sur un premier noeud (102) du réseau ;
b) la détection d'au moins un deuxième noeud (104) du réseau à partir du premier noeud ;
c) le transfert de la structure de données informatiques du premier noeud à l'au moins un deuxième noeud ;
d) l'installation des données utiles via l'interface sur l'au moins un deuxième noeud ;
e) la répétition des étapes b) à d), au moins un troisième noeud correspondant au deuxième noeud et le deuxième noeud correspondant au premier noeud et la détection des noeuds de réseau individuels s'effectuant par respectivement des noeuds de réseau adjacents.

2. Procédé selon la revendication 1, dans lequel la structure de données informatiques est au préalable introduite dans le réseau auto-organisé via le premier noeud.

3. Procédé selon la revendication 1 ou 2, dans lequel dans le cas des données utiles il s'agit d'un code exécutable et dans lequel la structure de données informatiques présente en outre un code exécutable pour positionner les données utiles sur les noeuds (102, 104).

4. Procédé selon la revendication 1, 2 ou 3, dans lequel la structure de données informatiques présente un compteur (148), dans lequel le compteur est paramétré lors de l'introduction de la structure de données informatiques dans le réseau à une valeur de départ prédéfinie (150), dans lequel le compteur est baissé ou relevé sur chaque noeud, qui est atteint par la structure de données informatiques ou sur lequel les données utiles sont installées, dans lequel la structure de données informatiques n'est transmise au noeud que lorsque le compteur est plus grand ou plus petit qu'une valeur de fin, dans lequel l'augmentation de la valeur de départ s'effectue dans le cas où la valeur de fin est plus grande que la valeur de départ et dans lequel de manière correspondante la baisse de la valeur de départ s'effectue lorsque la valeur de fin est plus petite que la valeur de départ.

5. Procédé selon l'une des revendications 1 à 4, avec en outre l'étape de stockage de la structure de données informatiques sur le premier noeud, dans le cas où l'au moins un deuxième noeud ne peut être atteint temporairement, dans lequel la structure de données informatiques est transmise au deuxième noeud lorsque l'au moins un deuxième noeud peut de nouveau être atteint.

6. Procédé selon l'une des revendications précédentes, dans lequel chaque noeud du réseau, qui est prévu pour l'interaction avec la structure de données informatiques, présente un point d'insertion (120, 132), dans lequel la structure de données informatiques transfère les données utiles au noeud via l'interface et le point d'insertion.

7. Procédé selon l'une des revendications précédentes, dans lequel la structure de données informatiques présente une signature (152), dans lequel chaque noeud présente des moyens destinés à la vérification de la signature, dans lequel l'installation de la structure de données informatiques et/ou des données utiles sur un noeud ne s'effectue que lorsque l'authenticité de la signature a été constatée par le biais des moyens destinés à la vérification de la signature.

8. Procédé selon l'une des revendications précédentes, dans lequel il est déterminé à la suite de la détection du deuxième noeud si la structure de données informatiques a déjà été transmise au deuxième noeud, et dans lequel aucun autre transfert de la structure de données informatiques n'a lieu dans le cas où la structure de données informatiques a déjà été transmise au deuxième noeud.

9. Procédé selon l'une des revendications précédentes, avec en outre l'étape de vérification de l'ensemble de données du noeud sur lequel une installation des données utiles est prévue, dans lequel, dans le cas où les données utiles sont inappropriées pour le noeud et/ou l'installation des données utiles sur le noeud est inutile, aucune installation des données utiles ne s'effectue.

10. Procédé selon l'une des revendications précédentes, dans lequel les données utiles sont installées en vue de l'actualisation d'une application présente sur le noeud, dans lequel l'installation s'effectue sans qu'une exécution de l'application sur le noeud soit interrompue.

11. Procédé selon la revendication 10, dans lequel le noeud présente une mémoire (400), dans lequel l'application (402) est stockée dans une première zone de la mémoire en vue d'une exécution, dans lequel les données utiles (406) sont prévues pour une composante à actualiser (404) de l'application, dans lequel la composante à actualiser de l'application est mise en mémoire au niveau d'une adresse d'entrée (416) dans la première zone de la mémoire, avec en outre les étapes suivantes :
- le stockage des données utiles dans une deuxième adresse (418) dans une deuxième zone libre de la mémoire ;
- l'installation d'une première instruction de saut (410) dans la mémoire, la première instruction de saut conduisant d'abord encore à l'adresse d'entrée (416) ;
- la détermination d'instructions de saut et d'appel (408) dans l'application dans la première zone de mémoire, qui conduisent à l'adresse d'entrée (416) ;
- le remplacement des instructions de saut et d'appel déterminées par le biais d'instructions de saut et d'appel qui conduisent à la première instruction de saut ;
- la commutation de la première instruction de saut de l'adresse d'entrée (416) à la deuxième adresse (418) ;
- le remplacement facultatif de toutes les instructions de saut et d'appel qui conduisent à la première instruction de saut, par le biais d'instructions de saut et d'appel qui conduisent à la deuxième adresse.

12. Procédé selon la revendication 11, dans lequel l'adresse d'entrée est prédéfinie pour la composante à actualiser dans la structure de données informatiques ou est déterminée au moyen d'un procédé de recherche prédéfini par la structure de données informatiques.

13. Procédé selon la revendication 10, dans lequel le noeud présente une mémoire (400), dans lequel le noeud présente en outre un gestionnaire de services, dans lequel l'application est stockée dans une première zone de la mémoire en vue d'une exécution, dans lequel les données utiles mettent à disposition une nouvelle fonction de l'application, dans lequel le procédé présente en outre les étapes suivantes :
- stockage des données utiles dans une deuxième zone libre de la mémoire ;
- annonce de la nouvelle fonction auprès du gestionnaire de services, comme quoi la nouvelle fonction de l'application peut être exécutée pour le noeud.

14. Procédé selon la revendication 10, dans lequel le noeud présente une mémoire (400), dans lequel l'application (402) est stockée dans une première zone de la mémoire en vue d'une exécution, dans lequel les données utiles (414) mettent à disposition une nouvelle fonction de l'application, dans lequel le procédé présente en outre les étapes suivantes :
- stockage des données utiles dans une deuxième adresse (420) dans une deuxième zone libre de la mémoire ;
- détermination d'un point de raccordement (412) pour la nouvelle fonction dans l'application, le premier point de raccordement étant stocké dans une première adresse dans la première zone ;
- installation d'un premier saut de la première adresse à la deuxième adresse et d'un deuxième saut à la fin de la deuxième zone pour revenir vers une troisième adresse, la troisième adresse suivant la première adresse.

15. Procédé selon l'une des revendications précédentes, dans lequel il s'agit dans le cas des données utiles d'un Firmware, d'actualisations pour le Firmware, d'agents ou d'agents destructeurs, dans lequel les agents destructeurs sont prévus pour la désinstallation d'agents sur le noeud.

16. Procédé selon l'une des revendications précédentes, dans lequel il s'agit dans le cas du réseau d'un réseau d'un système d'automatisation ou d'un réseau de capteurs.

17. Produit de programme informatique avec des instructions exécutables par un ordinateur pour la réalisation du procédé selon l'une des revendications 1 à 16.

18. Structure de données informatiques (418), prévue pour la diffusion pour l'essentiel autonome de données utiles, sans connaissance du nombre et de l'adresse des noeuds du réseau à mettre à jour via les noeuds de réseau dans le réseau sur les noeuds d'un réseau auto-organisé, avec .
- au moins une interface pour l'interaction avec les noeuds du réseau ;
- les données utiles ;
- des moyens destinés à l'installation des données utiles via l'interface sur un premier noeud du réseau ;
- des moyens destinés à la détection d'au moins un deuxième noeud du réseau à partir du premier noeud, la détection des noeuds de réseau individuels s'effectuant par un noeud de réseau respectivement adjacent ;
- des moyens destinés à effectuer une transmission d'eux-mêmes du premier noeud à l'au moins un deuxième noeud ;
- des moyens destinés à l'installation des données utiles via l'interface sur l'au moins un deuxième noeud et destinés à la recherche d'autres noeuds à partir du deuxième noeud.

19. Structure de données informatiques selon la revendication 18, dans laquelle il s'agit dans le cas des données utiles d'un code exécutable et dans laquelle la structure de données informatiques présente en outre un code exécutable, dans laquelle les données utiles peuvent être placées sur le noeud (102, 104) avec le code exécutable.

20. Structure de données informatiques selon la revendication 18 ou 19, dans laquelle la structure de données informatiques présente un compteur, dans laquelle le compteur est paramétré lors de l'introduction de la structure de données informatiques dans le réseau à une valeur de départ prédéfinie (150), dans laquelle le compteur peut être réduit ou agrandi sur chaque noeud qui est atteint par la structure de données informatiques ou sur lequel les données utiles sont installées, dans laquelle la structure de données informatiques ne peut être transmise à un autre noeud que lorsque le compteur est plus grand ou plus petit qu'une valeur de fin, dans laquelle l'augmentation de la valeur de départ s'effectue dans le cas où la valeur de fin est plus grande que la valeur de départ et dans laquelle de manière correspondante la réduction de la valeur de départ s'effectue lorsque la valeur de fin est plus petite que la valeur de départ.

21. Structure de données informatiques selon la revendication 18, 19 ou 20, avec en outre des moyens destinés à détecter si le deuxième noeud peut être atteint par le premier noeud et avec des moyens destinés à l'initialisation du premier noeud pour le stockage de la structure de données informatiques dans le cas où l'au moins un deuxième noeud ne peut pas être atteint temporairement.

22. Structure de données informatiques selon l'une des revendications précédentes 18 à 21, dans laquelle chaque noeud du réseau, qui est prévu pour l'interaction avec la structure de données informatiques, présente un point d'insertion, dans laquelle la structure de données informatiques présente des moyens destinés au transfert des données utiles aux noeuds via l'interface et le point d'insertion.

23. Structure de données informatiques selon l'une des revendications précédentes 18 à 22, avec en outre une signature au moyen de laquelle l'authenticité de la structure de données informatiques peut être constatée.

24. Structure de données informatiques selon l'une de revendications précédentes 18 à 23, avec en outre des moyens destinés à détecter si la structure de données informatiques a déjà été transmise au deuxième noeud, et avec des moyens destinés à bloquer un autre transfert de la structure de données informatiques au deuxième noeud, dans le cas où la structure de données a déjà été transmise au deuxième noeud.

25. Structure de données informatiques selon l'une des revendications précédentes 18 à 24, avec en outre des moyens destinés à vérifier l'ensemble de données du noeud sur lequel une installation des données utiles est prévue, et dans laquelle, dans le cas où les données utiles sont inappropriées pour le noeud et/ou l'installation des données utiles sur le noeud n'est pas nécessaire, aucune installation des données utiles ne s'effectue.

26. Structure de données informatiques selon l'une des revendications précédentes 18 à 25, avec des moyens destinés à installer les données utiles en vue de l'actualisation d'une application présente sur le noeud sans interruption de l'exécution de l'application sur le noeud.

27. Structure de données informatiques selon la revendication 26, dans laquelle le noeud présente une mémoire, dans laquelle l'application est stockée dans une première zone de la mémoire en vue d'une exécution, dans laquelle les données utiles sont prévues pour une composante à actualiser de l'application, dans laquelle la composante à actualiser de l'application est mise en mémoire au niveau d'une adresse d'entrée (416) dans la première zone de la mémoire, dans laquelle la structure de données informatiques comprend en outre ce qui suit :
- des moyens destinés à stocker les données utiles dans une deuxième adresse dans une deuxième zone libre de la mémoire ;
- des moyens destinés à installer une première instruction de saut dans la mémoire, la première instruction de saut conduisant d'abord à l'adresse d'entrée et pouvant ensuite être commutée sur la deuxième adresse ;
- des moyens destinés à déterminer des instructions de saut et d'appel dans l'application qui conduisent à l'adresse d'entrée (416) ;
- des moyens destinés à remplacer les instructions de saut et d'appel déterminées par des instructions de saut et d'appel qui conduisent à la première instruction de saut ;
- des moyens destinés à remplacer toutes les instructions de saut et d'appel qui conduisent à la première instruction de saut par des instructions de saut et d'appel qui conduisent à la deuxième adresse.

28. Structure de données informatiques selon la revendication 27, dans laquelle l'adresse d'entrée pour la composante à actualiser est prédéfinie dans la structure de données informatiques ou déterminée par la structure de données informatiques au moyen d'un procédé de recherche prédéfini.

29. Structure de données informatiques selon la revendication 26, dans laquelle le noeud présente une mémoire, dans laquelle le noeud présente en outre un gestionnaire de services, dans laquelle l'application est stockée dans une première zone de la mémoire en vue d'une exécution, dans laquelle les données utiles mettent à disposition une nouvelle fonction de l'application, dans laquelle la structure de données informatiques présente en outre ce qui suit :
- des moyens destinés à stocker les données utiles sur une deuxième zone libre de la mémoire ;
- des moyens destinés à annoncer la nouvelle fonction auprès du gestionnaire de services, comme quoi la nouvelle fonction de l'application peut être exécutée pour le noeud.

30. Structure de données informatiques selon la revendication 26, dans laquelle le noeud présente une mémoire, dans laquelle l'application est stockée dans une première zone de la mémoire en vue d'une exécution, dans laquelle les données utiles mettent à disposition une nouvelle fonction de l'application, dans laquelle la structure de données informatiques présente en outre ce qui suit :
- des moyens destinés à stocker les données utiles dans une deuxième adresse sur une deuxième zone libre de la mémoire ;
- des moyens destinés à déterminer un point de raccordement pour la nouvelle fonction dans l'application, le premier point de raccordement étant stocké dans une première adresse dans la première zone ;
- des moyens destinés à installer un premier saut de la première adresse à la deuxième adresse et un deuxième saut à la fin de la deuxième zone pour revenir vers l'adresse qui suit la première adresse.

31. Noeud de réseau (102 ; 502) dans un réseau auto-organisé (100 ; 500) avec :
- un point d'insertion (120) pour une interface (122) d'une structure de données informatiques (118), la structure de données informatiques présentant en outre des données utiles (124),
- des moyens destinés à installer les données utiles sur le noeud de réseau,
- des moyens destinés à envoyer la structure de données informatiques à d'autres noeuds de réseau (104, ..., 110 ; 504, ..., 510) du réseau,
- appropriés pour la réalisation du procédé selon l'une des revendications 1 à 16.

32. Noeud de réseau selon la revendication 31, avec des moyens destinés à avertir (516) un serveur central (512) du réseau, dans lesquels par le biais de l'avertissement l'installation des données utiles sur le noeud de réseau est indiquée au serveur.

33. Noeud de réseau selon la revendication 31 ou 32, avec en outre des moyens destinés à vérifier une signature (152) de la structure de données informatiques, dans lesquels une installation des données utiles n'est réalisée par les noeuds de réseau que lorsque l'authenticité de la signature a été constatée.
